# EUROPÄISCHE PATENTSCHRIFT

(11) **EP 2 953 245 B1**
(45) Veröffentlichungstag und Bekanntmachung des Hinweises auf die Patenterteilung: **13.09.2017**
(21) Anmeldenummer: 15168066.7
(22) Anmeldetag: 19.05.2015
(51) Int. Cl.: H02K 17/20, H02K 3/02

(54) **KÄFIGLÄUFER EINER ASYNCHRONMASCHINE**
CAGE ROTOR FOR AN ASYNCHRONOUS MOTOR
INDUIT À CAGE D'ÉCUREUIL D'UNE MACHINE ASYNCHRONE

(30) Priorität: 02.06.2014 DE 102014210339
(43) Veröffentlichungstag der Anmeldung: 09.12.2015
(73) Patentinhaber: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE); Wolf, Nico, 98596 Trusetal (DE)

(56) Entgegenhaltungen:
- DE-A1-102005 030 797
- DE-A1-102010 041 795
- GB-A- 822 313
- US-A1- 2005 017 597
- US-A1- 2014 139 066

## Beschreibung

Die Erfindung betrifft einen Käfigläufer einer Asynchronmaschine mit axial geschichteten Blechpaket, das im wesentlichen axial verlaufende Nuten aufweist, in denen sich ein elektrischer Leiter befindet, der mit den elektrischen Leitern in anderen Nuten an den jeweiligen Stirnseiten des Blechpakets Kurzschlussringe ausbildet und so einen Käfigläufer bildet.

Bei Asynchronmotoren mit Käfigläufer, die im höheren Drehzahlbereich eingesetzt werden, zeigt sich am Rotor, insbesondere der Kurzschlussring als Schwachstelle. Dabei kommt es am Kurzschlussring durch die Fliehkräfte zu unregelmäßigen Aufweitungen, die sich zu einer unzulässigen nicht rückbildenden Änderungen und insofern als Unwucht im Läufer bemerkbar machen. Dies tritt vor allem bei Kurzschlussringen auf, die als elektrisch leitende Vergussmasse reines Aluminium (AL99,5) verwenden. Dabei ist zwar der elektrische Leitwert vergleichsweise hoch, jedoch ist dieses Material nicht für hohe Fliehkraftbeanspruchung geeignet.

Aus der DE 10 2005 030 797 A1 ist ein Käfigläufer einer Induktionsmaschine bekannt, wobei hohle Formstäbe in Nuten des Käfigläufers angeordnet werden.

Die Offenlegungsschrift US 2014/0139066 A1 beschreibt einen Rotor mit einem Rotorblechpaket, das in axiale Richtung angeordnete Schlitze aufweist. In den Schlitzen sind Läuferstäbe angeordnet. Die Schlitze und die Rotorstäbe umfassen jeweils im Querschnitt eine Mehrzahl von Erhöhungen und Vertiefungen in mindestens einer der beiden Stirnflächen in einer Umfangsrichtung.

Die Offenlegungsschrift GB 822 313 A beschreibt einen Asynchronmotor, der einen Hochstabläufer aufweist, um eine maximale Stromverdrängung während des Anlaufs zu erreichen. Die Form der Rotorstäbe ist derartig ausgestaltet, dass sie sich in den Nuten selbst verklemmen.

Ausgehend davon liegt der Erfindung die Aufgabe zugrunde, einen Käfigläufer einer Asynchronmaschine zu schaffen, die sowohl den Fliehkraftbeanspruchungen Stand hält, als auch vergleichsweise wenig Verluste aufweist.

Die Lösung der gestellten Aufgabe gelingt durch einen Käfigläufer einer Asynchronmaschine mit
- einem axial geschichteten Blechpaket, mit im Wesentlichen axial verlaufenden Nuten, in denen sich zumindest ein elektrischer Leiter befindet, der sich zumindest aus zwei unterschiedlichen elektrisch leitfähigen Materialien zusammensetzt,
- einem an der jeweiligen Stirnseite des Blechpakets vorgesehenen Kurzschlussring, der die axial aus dem Blechpaket ragenden elektrischen Leiter miteinander elektrisch leitend verbindet,
- wobei das hochfestere Material der unterschiedlichen elektrisch leitfähigen Materialien im axialen Verlauf der jeweiligen Nut betrachtet zumindest abschnittsweise dem radial äußeren Bereich der Nut zugewandt ist,
wobei zumindest ein Teilleiter der Leiter des Kurzschlusskäfigs als vorgeformter Massivleiter ausgebildet ist,
wobei der vorgeformte Massivleiter spezielle Konturen aufweist, wodurch Flächen des Massivleiters geschaffen sind, die nahezu gleichgerichtet mit der Richtung von Tangentialspannungen verlaufen,
wobei der Massivleiter vom hochfesteren Material der unterschiedlichen elektrisch leitfähigen Materialien zumindest teilweise umgeben ist,
wobei der Massivleiter zumindest abschnittsweise S-förmig, kammartig oder doppelkammartig ausgebildet ist.

Die Lösung der gestellten Aufgabe gelingt auch durch eine Asynchronmaschine mit einem derartigen Käfigläufer, der auf einer Welle drehfest verbunden ist.

Weiterhin gelingt die Lösung der Aufgabe durch einen Fahrzeugantrieb oder einen Kompressorantrieb mit einem derartigen Käfigläufer.

Vorteilhafte Ausgestaltungen der Erfindung werden in den abhängigen Ansprüchen erläutert.

Erfindungsgemäß wird nunmehr eine Aluminiumlegierung verwendet, insbesondere A19Cu3 oder ALSi9Cu3 mit Rm=240 N/mm² und Rp0,2 = 140 N/ mm² mit einem Leitwert von nur 21 m/Ohm mm². Dieses Material ist mit vergleichsweise guten technischen Eigenschaften für Druckgießverfahren ausgestattet, indem es bei vergleichsweise geringen Temperaturen gießfähig ist.

Des Weiteren wird dadurch die Drehzahltauglichkeit des Kurzschlussrings erheblich erhöht, da diese Vergussmasse erst bei höheren Drehzahlen in einen plastischen Bereich kommt. Um den geringen Leitwert in der Nut auszugleichen, werden erfindungsgemäß Aluminiumstäbe A1 99,7 mit einem Leitwert von 36m/ Ohm mm² mit dementsprechenden Nutgeometrien und einer gewissen Nutfüllung in die Nut eingesetzt. Zum Beispiel 85% der Nutfüllung durch A1-Stab und 15% Vergussmasse. Der vergleichsweise geringere Leitwert im Kurzschlussring kann durch Querschnittsvergrößerung um einen Faktor von 1,7 ausgeglichen werden.

Beim Eingießen kommt es zwischen Stab und der Vergussmasse zu einer Legierung, die in der zulässigen Dehnfähigkeit mindestens der der Vergussmasse entspricht. Eine Kontaktfläche, die aufgrund einer Aufweitung bei hohen Drehzahlen senkrecht zu den Tangentialspannungen verläuft, reißt somit nicht ab. Die Ausdehnungskoeffizienten der Aluminiumstäbe und der Vergussmasse sind nahezu identisch. Das System ist somit für hohe Drehzahlen geeignet.

Bei einer Nutfüllung von ca. 40% mit speziellem Kupferstab und 60% Vergussmasse Al9Cu3 ergibt sich in der Nut ein Leitwert von ca. 35m/Ohm mm². Der geringere Leitwert im Kurzschlussring kann auch hierbei mittels einer Querschnittsvergrößerung des leitenden Kurzschlussringes um den Faktor 1,7 ausgeglichen werden.

Der eingelegte Kupferstab muss jedoch in eine für hohe Drehzahl speziell entwickelte Geometrie ausgeführt sein, damit es aufgrund der hohen Tangentialspannungen, nicht zu einem Abriss der Kontaktfläche des Stabes zum gegossenen Kurzschlussring kommt. Dieser Kupferstab weist spezielle Geometrien für hohe Drehzahlen und Tangentialspannungen im Kurzschlussring auf.

Damit sich zwischen Stab und Vergussmasse eine intermetallische Phase ausbilden kann, wird der Stab beschichtet.

Bei der Bildung, Herstellung. Geometrien und Verhalten der intermetallischen Phasen wird explizit auch auf die Offenbarung in der DE 10 2009 008 440 B3 verwiesen, die hiermit auch aufgenommen werden soll.

Die Verbindung zwischen den Leitern und den Kurzschlussringen wird verbessert indem die Materialien an geeigneten Stellen eine mischkristalline Verbindung eingehen. Die Kurzschlussstäbe ragen an beiden stirnseitigen Enden des Läuferblechpakets axial aus diesem heraus und in die gegossenen Kurzschlussringe hinein.

Die Erhöhung der Bindungskräfte zwischen Leiterenden und Kurzschlussringen wird u.a. dadurch erreicht, dass die Teilleiter - also die Stäbe aus Aluminium oder Kupfer - derartig beschichtet werden, dass sowohl zwischen der Beschichtung und den Leitern eine Legierung - also eine mischkristalline Verbindung - entsteht, als auch zwischen der Beschichtung und dem gegossenen Material der Kurzschlussringe.

Bei einer Erwärmung des Käfigläufers im Betrieb werden Temperaturen von ca. 200 bis 250°C erreicht. Dadurch kommt es zu einer hohen Wärmeausdehnung in den ausgegossenen Nutbereichen. Der Übergang zwischen den Leitern und den Kurzschlussringen kann sich dabei lösen, wodurch es zu einer Verschlechterung des elektrischen Leitwertes im Bereich des Übergangs zwischen den Kurzschlussringen und den Leitern kommt. Dies führt zu Übergangswiderständen, die den Kurzschlussring zusätzlich aufheizen.

Das im Druckgussverfahren aus Abdichtungsgründen axial zusammengepresste Läuferblechpaket kann sich außerdem axial wieder aufweiten, wenn die Verbindung zwischen den Teilleitern - also den Stäben - und den gegossenen Kurzschlussringen keine ausreichende axiale Haltekraft aufbringen kann.

Durch die Beschichtung werden die Leiter durch maximal mögliche Bindungskräfte an den Druckguss gebunden. Entsprechend bleibt die Verbindung zwischen den Leitern und den Kurzschlussringen trotz gegebenenfalls unterschiedlicher thermischer Ausdehnungskoeffizienten stabil, wenn der Käfigläufer im Betrieb der dynamoelektrischen Maschine ausgeprägte thermische Zyklen durchfährt. Bei hohen Drehzahlen bewirken auch die auf den Läufer wirkenden Fliehkräfte teils heftige Spannungen in dem Leiter-Kurschlussring gebildet. Weiterhin wird durch die Legierung ein optimaler elektrischer Übergangsleitwert zwischen den Materialien erzielt.

Die Beschichtung und die erste Legierungsschicht kann durch elektromechanisches Galvanisieren erzeugt werden. Hierbei wird zunächst auf elektrochemischem Wege eine Schicht des Beschichtungsmaterials auf den Stäben abgeschieden. Dabei entsteht bei diesem Prozess zwischen dem Stab und dem Beschichtungsmaterial die gewünschte mischkristalline Verbindung. Wenn anschließend Druckgussmaterial, also Al insbesondere mittels des Druckgussprozesses appliziert wird, schmilzt die Beschichtung auf den Stäben auf und geht mit der Druckgussschmelze ebenfalls eine mischkristalline Verbindung ein, so dass eine zweite Legierungsschicht entsteht.

Anstelle des Galvanisierens sind andere Beschichtungsverfahren denkbar, die ebenso zu den gewünschten mischkristallinen Verbindungen zwischen den Materialien führen. Dabei ist thermisches Spritzverfahren, insbesondere Flammspritzen, Plasmaspritzen, Lichtbogenspritzen oder Laserspritzen, besonders geeignet.

Ebenso kann diese Schicht durch Kaltspritzen oder durch Aufdampfen erzeugt werden.

Bei all diesen Verfahren insbesondere aber auch beim Galvanisieren wird vor dem Beschichten eine Oxidschicht der Leiter durch chemische Vorbehandlung dieser Leiter entfernt. Eine Oxidschicht hat isolierende elektrische Eigenschaften, so dass durch das Entfernen besagter Oxidschicht der Übergangswiderstand zwischen den Materialien deutlich reduziert wird.

Beispielsweise wird hierbei bei einem Hybridläufer mit Kupferstäben und Aluminiumkurzschlussringen eine dünne Aluminiumschicht auf die Oberfläche der Kupferleiter aufgetragen. Dies kann beispielsweise durch Galvanisieren erfolgen. Bei diesem Beschichtungsprozess entsteht eine Legierung zwischen der Aluminiumbeschichtung und den Kupferleitern. Anschließend wird eine Aluminiumdruckgussmasse in die Nuten eingespritzt, wobei gleichzeitig damit auch die Kurzschlussringe ausgegossen werden. Hierbei wird die Aluminiumbeschichtung an der Oberfläche der Leiter aufgeschmolzen und geht mit der Aluminiumschmelze eine mischkristalline Verbindung ein. Dabei wird schließlich die zweite Legierungsschicht gebildet. Insbesondere im Bereich der Enden der Kupferstäbe, die aus dem Läuferblechpaket heraus und in die Kurzschlussringe hineinragen, entsteht eine äußerst stabile Verbindung zwischen den beiden Materialien, so dass die Festigkeit bezüglich thermischer Zyklen und im Betrieb auftretenden Fliehkräften erhöht wird. Hierbei entsteht eine nahezu ideale elektrische und mechanische Verbindung zwischen den Kurzschlussringen aus Aluminium und den Kupferstäben.

Bei dem Gussverfahren kann es zu signifikanten chemischen Reaktionen zwischen den beschichteten Teilleitern, also den Stäben und der Schmelze kommen. Um einen zu großen Abtrag von den Stäben durch die mit den Stäben in Berührung stehende Schmelze zu vermeiden, können in vorteilhafter Ausgestaltung der Erfindung die Beschichtung und die Legierungsschichten ausschließlich an aus dem Läuferblechpaket heraus und in die Kurzschlussringe hereinragenden Endbereichen der Leiter angeordnet werden. Die besagten Endbereiche stellen eine kritische Verbindungsstelle zwischen den Leitern und den Kurzschlussringen dar. Entsprechend ist hier die starke kristalline Verbindung der beteiligten Materialien und Teilleiter besonders wichtig.

Auch ist vor allem in diesem Endbereich jedes Leiters dem elektrischen Übergangsleitwert zwischen den beiden Materialien eine besondere Bedeutung zuzumessen, da hier der Stromfluss von den Leitern auf die Kurzschlussringe übergeht. Hingegen ist auch bei einem mittels Druckguss hergestellten Läufer eine starke kristalline Verbindung der Leiter in den Bereichen innerhalb der Nut weniger wichtig, da hier kein Stromfluss zwischen den Teilleitern zu erwarten ist.

An der Kontaktfläche von Stab und Vergussmasse bildet sich eine härtere Legierung, z.B. ALCU2, die in der Dehnfähigkeit geringer ist, als die beiden zu verbindenden Partner Kupfer und Vergussmasse jeweils aufweisen. Um nunmehr ein Abreißen des Stabes vom Kurzschlussring bei hoher Drehzahl zu verhindern, sind nunmehr spezielle Konturen im Stab vorgesehen, wodurch Flächen geschaffen wurden, die nahezu gleichgerichtet mit der Richtung der Tangentialspannungen verläuft. Diese Kontaktflächen werden somit auf Scherung beansprucht, zusätzlich ergibt sich aus der Kontur des Stabes ein Formschluss.

In einer weiteren Ausführungsform weist der Kurzschlussring einen Stützring auf und verhindert somit eine plastische Aufweitung aufgrund der Fliehkräfte bei Drehzahlen, mit Umfangsgeschwindigkeiten größer 125 m/s. Der Stützring wird aus einem Material hergestellt, das in der Wärmeausdehnung dem des zu stützenden Kurzschlussrings entspricht, z.B.
EN AW-7075. Vorzugsweise aus einer Aluminiumlegierung mit sehr hoher Zugfestigkeit.

Der Stützring kann auch aus einem Strangpressmaterial gewonnen werden, das die erforderlichen Materialkennwerte aufweist.

Hier bieten sich insbesondere hochfeste Aluminiumlegierungen an, die Zugfestigkeiten im Bereich von 500 N/mm² erreichen. Diese hochfesten Aluminiumlegierungen mit einem Wärmeausdehnungskoeffizient von 23,6x10⁻⁶ 1/K entsprechen dem Wärmeausdehnungskoeffizient des reinen Aluminiums.

Erfindungsgemäß wird die reduziert elektrische Leitfähigkeit der Vergussmasse für hohe Drehzahlen durch Einbringen von Aluminium- bzw. Kupferstäben in der Nut ausgeglichen. Somit wird eine hohe Drehzahltauglichkeit der Asynchronmaschine bei gleichzeitig hohem Leitwert in der Nut erzielt. Bei besonders hohen Drehzahlen wird durch Zusammenwirken des Stützrings ein Fließen der Vergussmasse verhindert. Das Material des Stützrings hat einen gleichen Wärmeausdehnungskoeffizienten wie der Kurzschlussring bei gleichzeitig hoher Zugfestigkeit. Dadurch kann ein Temperaturbereich von -40°C bis +250°C der dynamoelektrischen Maschine abgesichert werden. Drehzahlen im Bereich von 200 bis 230 m/s Umfangsgeschwindigkeit können damit für erfindungsgemäße Käfigläufer realisiert werden.

Die zulässige Streckgrenze des Stützrings kann somit nur für die Belastung aus der Fliehkraft bei hoher Drehzahl genutzt werden und wird nicht schon durch die Wärmeausdehnung des Kurzschlussrings "verbraucht". Deshalb ist bereits eine Aluminiumlegierung mit Zugfestigkeit von 540 N/mm² ausreichend.

Bei einer hochfesten Aluminiumlegierung, z.B. AL7075 mit hoher Zugfestigkeit können somit Drehzahlsteigerungen gegenüber herkömmlichen Anordnungen von bis zu 70% erzielt werden, wobei damit insbesondere Vorgaben auch aus der Fahrzeugtechnik (Motoren für elektrisch angetriebene Autos und Busse, rein elektrisch und hybride Antriebe), oder in der Kompressorentechnik abgedeckt werden.

Wird der Kopfbereich der Nuten des Rotors mit Aluminiumlegierung anstatt Al99,5 ausgegossen, wird aufgrund der höheren Festigkeit dieses Materials ein Herausfließen der Vergussmasse aus der Nut verhindert. Es können somit auch nahezu offene, halboffene Nuten oder Nuten mit vergleichsweise schmalem Nutschlitz im Rotorblechpaket vorgesehen werden, die aufgrund der Streuinduktivität dieser Nuten für den Umrichtereinsatz dieser Rotoren geeignet sind

Die Erfindung sowie weitere vorteilhafte Ausgestaltungen der Erfindung werden anhand der dargestellten Ausführungsbeispielen näher erläutert; dabei zeigen:
- FIG 1: einen prinzipiellen Längsschnitt durch eine elektrische Maschine,
- FIG 2: einen Teilquerschnitt eines Rotors,
- FIG 3: einen Teillängsschnitt eines Rotors,
- FIG 4, FIG 5: einen Teilquerschnitt eines Rotors,
- FIG 6: einen Teilquerschnitt des Rotorblechpakets.

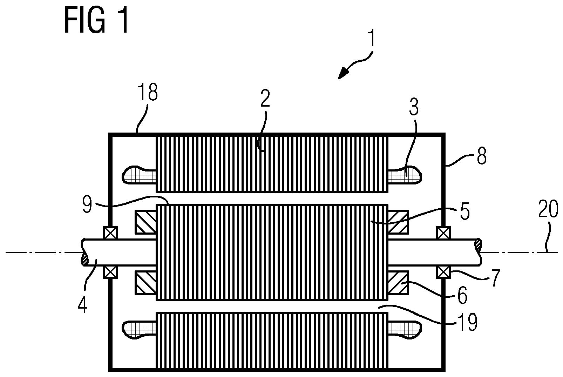

FIG 1 zeigt in einer prinzipiellen Darstellung den Längsschnitt einer dynamoelektrischen Maschine, die als Asynchronmotor ausgeführt ist, wobei ein Gehäuse 18, das Lagerschilde 8 aufnimmt, eine Welle 4 hält, auf der ein Rotor bzw. Läufer 5 mit seinem Blechpaket drehfest verbunden ist. Der Rotor bzw. Läufer 5 wird im Umfeld dieser Erfindung auch als Käfigläufer bezeichnet. Die Welle 4 dreht sich dabei um eine Achse 20. An den Stirnseiten dieses Blechpakets befindet sich jeweils ein Kurzschlussring 6, der die axial aus den Nuten 9 tretenden Leiter des Rotors 5 an den Stirnseiten elektrisch verbindet. Radial außerhalb des Rotors 5 befindet sich, beabstandet durch einen Luftspalt 19, ein Stator 2, der an seinen Stirnseiten Wickelköpfe eines Wicklungssystems 3 aufweist.

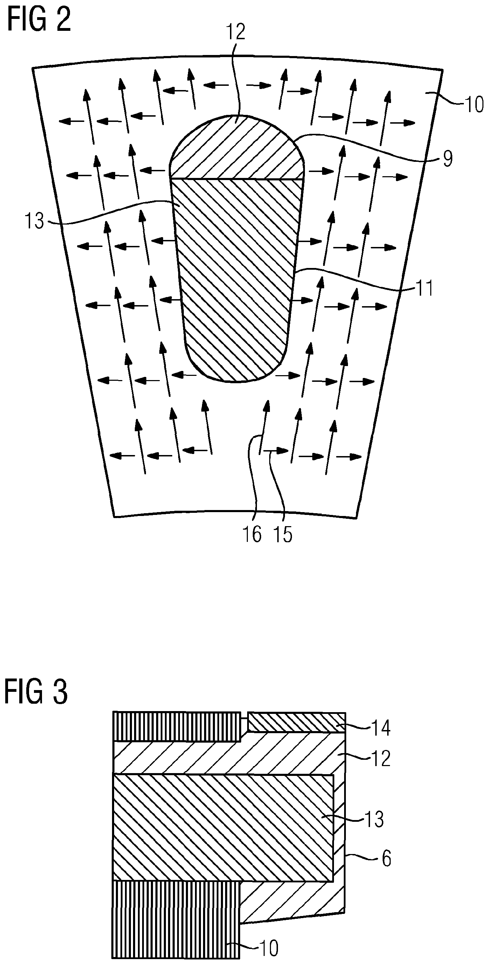

FIG 2 zeigt in einem Teilquerschnitts des Rotors 5 quer zu einer Achse 20 zwei Teilleiter, einen Stab aus Aluminium und einen Teilleiter im Nutkopfbereich in Aluminiumlegierung. Die im Betrieb des Asynchronmotors auftretenden Tangentialspannung 15 und Radialspannungen 16 sind - wie auch in den folgenden Figuren - in diesem Abschnitt des Rotors 5 mit Pfeilen gekennzeichnet. Zwischen dem Rotorblech und dem Leiterstab 13 ist eine Kontaktfläche 11 vorhanden.

FIG 3 zeigt in einem Teillängsschnitt einen Kurzschlussring 6, eines Rotors 5 nach FIG 2, der durch einen Stützring 14 gegenüber radialen Kräften - also Fliehkräften - im Betrieb des Asynchronmotors abgestützt ist. Ein Teilleiter 13 - also ein Stab - ragt axial über die Stirnfläche des Blechpakets 10 des Rotors 5 in den Kurzschlussring 6. Der Nutkopf ist auch dort in einer Aluminiumlegierung ausgeführt.

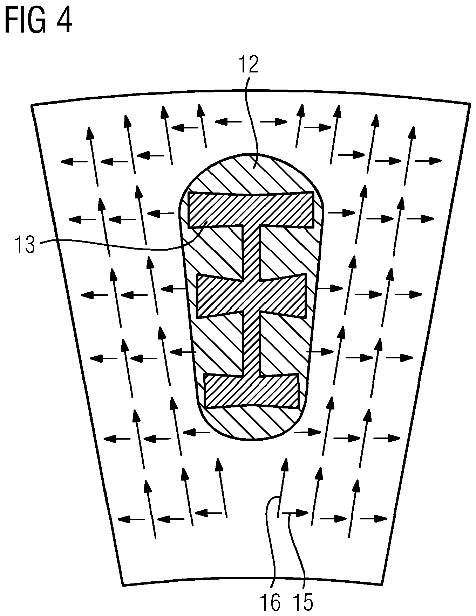

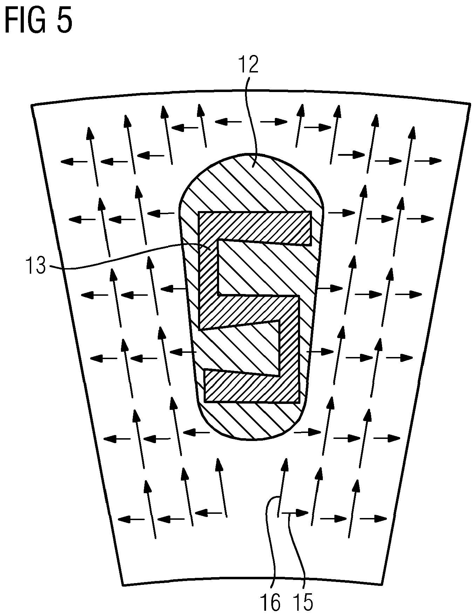

FIG 4 und FIG 5 zeigen im Querschnitt einen Kurzschlussring mit speziellen Stäben, d.h. Teilleiter 13 für Hochdrehzahl, wobei auch dort die radialen und tangentialen Spannungen durch Pfeile gekennzeichnet sind. Der Leiterstab 13 ist nach FIG 4 kammartig und nach FIG 5 S-förmig ausgeführt, um eine möglichst große Kontaktfläche der Stabkontur innerhalb des Kurzschlussringes 6 zu schaffen. Dabei sind die Leiterstäbe bzw. Teilleiter 13 über ihre gesamte axiale Länge kammartig oder S-förmig ausgeführt. Es sind aber auch Ausführungen möglich, bei denen die Teilleiter 13 lediglich abschnittsweise, also beispielsweise nur im Bereich der Kurzschlussringe mit vergrößerter Kontaktfläche, also z.B. kammartig, doppelkammartig, zahnradförmig, sternförmig oder S-förmig ausgeführt sind.

Grundsätzlich sind auch andere oberflächenvergrößernde Formgebungen der Teilleiter 13 möglich, entscheidend ist u.a., ob durch die Oberflächenvergrößerung die angestrebte Kontaktierung der Teilleiter 13 im Kurzschlussring 6 erreicht wird.

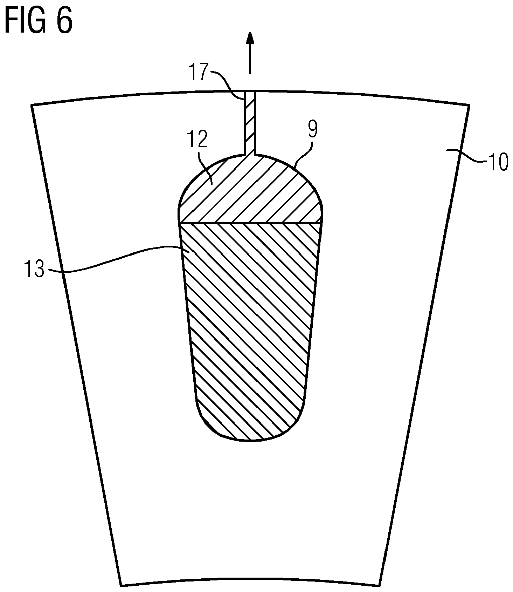

FIG 6 zeigt einen Teilquerschnitt einer Nut 9, die in Richtung des Luftspalts 18 durch einen Nutschlitz 17 ausgeführt ist, wobei der Teilleiter 12 im Nutkopfbereich in den Nutschlitz 17 ragt. Je nach Breite des Nutschlitzes 17 stellt sich eine Streuinduktivität ein, die für einen Umrichterbetrieb der dynamoelektrischen Maschine vorteilhaft sein kann.

Wird der Kopfbereich der Nuten des Rotors mit einer Aluminiumlegierung z.B. AlSi9Cu3 anstatt Al99,5 ausgegossen, wird aufgrund der höheren Festigkeit dieser Aluminiumlegierung ein "Herausfließen" der Vergussmasse aus der Nut 9 im Betrieb aufgrund der Fliehkräfte verhindert. Während des Vergießens wird der Nutschlitz 17 nach außen abgedichtet. Es können somit auch nahezu offene, halboffene Nuten 9 oder Nuten 9 mit vergleichsweise schmalem Nutschlitz 17 im Rotorblechpaket vorgesehen werden.

Folgende Ausführungen des Käfigläufers sind beispielsweise besonders für hohe Drehzahlen ausgelegt und deshalb besonders für Anwendungen in der Fahrzeugtechnik bei E-Cars (Direkt- oder Hybridantrieb) und bei Kompressorantrieben geeignet. Natürlich sind weitere Materialkombinationen eines Käfigläufers möglich, sofern Materialien mit ähnlichen Materialkennwerten eingesetzt werden.

So weist beispielsweise ein Käfigläufer mit Stäben bzw. Teilleiter 13 aus reinem Al, einem Gussmaterial ALSI9Cu3, das den Stab zumindest teilweise umgibt und mit einem Stützring 14 aus der Legierung AW7075 einen vergleichsweise hohen Leitwert bei sehr hoher Drehzahltauglichkeit auf. Dabei weisen Stab und Vergussmasse den gleichen Ausdehnungskoeffizienten auf. Die Stabanbindung an den Kurzschlussring 6 gelingt aufgrund der beiden AL-Komponenten besonders gut.

Ein Käfigläufer mit Stäben bzw. Teilleiter 13 aus Kupfer, einem Gussmaterial ALSI9Cu3, das den Stab zumindest teilweise umgibt und mit einem Stützring 14 aus der Legierung AW7075 weist ebenfalls einen vergleichsweise hohen Leitwert bei sehr hoher Drehzahltauglichkeit auf. Jedoch sind - wie oben ausgeführt - spezielle Konturen des Kupferstabes notwendig, um eine ausreichende Stabanbindung der Kupferstäbe im gegossenen Kurzschlussring 6 zu erhalten.

## Patentansprüche

1. Käfigläufer einer rotatorischen Asynchronmaschine (1) mit
- einem axial geschichteten Blechpaket, mit im Wesentlichen axial verlaufenden Nuten (9), in denen sich zumindest ein elektrischer Leiter befindet, der sich zumindest aus zwei Teilleitern (12,13) unterschiedlich elektrisch leitfähigen Materialien zusammensetzt,
- einem an der jeweiligen Stirnseite des Blechpakets vorgesehenen Kurzschlussring (6), der die axial aus dem Blechpaket ragenden elektrischen Leiter der jeweiligen Nuten miteinander elektrisch leitend verbindet, wobei das hochfestere Material der unterschiedlichen elektrisch leitfähigen Materialien im axialen Verlauf der jeweiligen Nut (9) betrachtet zumindest abschnittsweise dem radial äußeren Bereich der Nut (9) zugewandt ist,
wobei zumindest ein Teilleiter (12,13) der Leiter des Kurzschlusskäfigs als vorgeformter Massivleiter ausgebildet ist, **dadurch gekennzeichnet, dass** der vorgeformte Massivleiter spezielle Konturen aufweist, wodurch Flächen des Massivleiters geschaffen sind, die nahezu gleichgerichtet mit der Richtung von Tangentialspannungen verlaufen,
wobei der Massivleiter vom hochfesteren Material der unterschiedlichen elektrisch leitfähigen Materialien zumindest teilweise umgeben ist,
wobei der Massivleiter zumindest abschnittsweise S-förmig, kammartig oder doppelkammartig ausgebildet ist.

2. Käfigläufer einer Asynchronmaschine (1) nach Anspruch 1, **dadurch gekennzeichnet, dass** der Kurzschlussring (6) jeweils am radial äußeren Umfang zumindest einen Stützring (14) aufweist.

3. Käfigläufer einer Asynchronmaschine (1) nach Anspruch 1 oder 2,
**dadurch gekennzeichnet, dass** die axial verlaufenden Nuten (9) des Blechpakets des Käfigläufers zumindest abschnittsweise teilgeschlossene Nuten (9) bilden.

4. Käfigläufer einer Asynchronmaschine (1) nach einem der vorhergehenden Ansprüche,
**dadurch gekennzeichnet, dass** sich zwischen den beiden Teilleitern (12,13) eines Leiters eine Legierung ausbildet, die als Kontaktfläche wirkt.

5. Asynchronmaschine (1) mit einem Käfigläufer (5) nach einem der vorhergehenden Ansprüche, der auf einer Welle (4) drehfest verbunden ist.

6. Fahrzeugantrieb oder Kompressorantrieb mit einem Käfigläufer nach einem der Ansprüche 1 bis 4.

## Claims

1. Cage rotor of a rotary asynchronous machine (1) with
- an axially laminated core with grooves (9) running essentially axially, in which at least one electrical conductor is located which is at least composed of two part conductors (12, 13) of different electrically-conductive materials,
- a short-circuit ring (6) provided on the respective end face side of the laminated core, which connects the electrical conductors of the respective grooves protruding axially from the laminated core electrically-conductively to one another, wherein the higher-strength material of the different electrically-conductive materials, viewed in the axial course of the respective grooves (9), is facing, at least in sections, towards the radially-outer area of the groove (9),
wherein at least one part conductor (12, 13) of the conductors of the short-circuit cage is embodied as a preformed solid conductor,
**characterised in that**
the preformed solid conductor has special contours, through which the surfaces of the solid conductor are created which run practically in the same alignment as the direction of tangential stresses,
wherein the solid conductor is at least partly surrounded by the higher-strength material of the different electrically-conductive materials,
wherein the solid conductor is embodied, at least in sections, in an S shape, as a type of comb or as a type of double comb.

2. Cage rotor of an asynchronous machine (1) according to claim 1,
**characterised in that** the short-circuit ring (6) has at least one support ring (14) in each case on its radially outer circumference.

3. Cage rotor of an asynchronous machine (1) according to claim 1 or 2,
**characterised in that** the axial grooves (9) of the laminated core of the cage rotor form, at least in sections, part-closed grooves (9).

4. Cage rotor of an asynchronous machine (1) according to one of the preceding claims,
**characterised in that** an alloy which acts as a contact surface is embodied between the two part conductors (12, 13).

5. Asynchronous machine (1) with a cage rotor (5) according to one of the preceding claims, which is connected to a shaft (4) in a torsion-proof manner.

6. Vehicle drive or compressor drive with a cage rotor according to one of claims 1 to 4.

## Revendications

1. Induit à cage d'écureuil d'une machine (1) asynchrone tournante comprenant
- un paquet de tôles feuilleté axialement, ayant des encoches (9) s'étendant sensiblement axialement, dans lesquelles se trouve au moins un conducteur électrique, qui se compose d'au moins deux sous-conducteurs (12, 13) en matériaux différemment conducteurs de l'électricité,
- un anneau (6) de court-circuit, qui est prévu sur les côtés frontaux respectifs du paquet de tôles et qui relie, d'une manière conductrice de l'électricité, entre eux les conducteurs électriques dépassant axialement du paquet de tôles des encoches respectives, la matière la plus résistante des matières conduisant différemment l'électricité étant, considéré dans le tracé axial de l'encoche (9) respective, tournée, au moins par tronçon, vers la région la plus à l'extérieur radialement de l'encoche (9),
dans lequel au moins un sous-conducteur (12, 13) du conducteur de la cage de court-circuit est constitué sous la forme d'un conducteur plein préformé,
**caractérisé en ce que**
le conducteur plein préformé a des contours spéciaux grâce auxquels sont créées des surfaces du conducteur plein, qui s'étendent en étant orientées à peu près de la même façon que la direction de tensions tangentielles,
dans lequel le conducteur plein est entouré au moins en partie de matière plus résistante par les matières conductrices différemment de l'électricité,
dans lequel le conducteur plein est constitué au moins par tronçon en forme de S, en forme de peigne ou de type à double peigne.

2. Induit à cage d'écureuil d'une machine (1) asynchrone suivant la revendication 1,
**caractérisé en ce que** l'anneau (6) de court-circuit a au moins un anneau (14) de support sur le pourtour extérieur radialement.

3. Induit à cage d'écureuil d'une machine (1) asynchrone suivant la revendication 1 ou 2,
**caractérisé en ce que** les encoches (9), s'étendant axialement du paquet de tôles de l'induit à cage d'écureuil, forment au moins par tronçon des encoches (9) fermées en partie.

4. Induit à cage d'écureuil d'une machine (1) asynchrone suivant l'une des revendications précédentes,
**caractérisé en ce qu'**entre les deux sous-conducteurs (12, 13) d'un conducteur est constitué un alliage qui sert de surface de contact.

5. Machine (1) asynchrone ayant un induit (5) à cage d'écureuil suivant l'une des revendications précédentes, qui est solidaire en rotation d'un arbre (4).

6. Entraînement de véhicule ou entraînement de compresseur ayant un induit à cage d'écureuil suivant l'une des revendications 1 à 4.
